# EUROPEAN PATENT SPECIFICATION

(11) **EP 3 495 314 B1**
(45) Date of publication and mention of the grant of the patent: **22.07.2020**
(21) Application number: 18211068.4
(22) Date of filing: 07.12.2018
(51) Int. Cl.: B66F 9/075, B62D 1/28, B66F 17/00, B62D 15/02, G05D 1/02, B66F 9/06

(54) **SYSTEM AND METHOD FOR DETERMINING A FIRST STEERING ANGLE OF A FORKLIFT TRUCK**
SYSTEM UND VERFAHREN ZUR BESTIMMUNG EINES ERSTEN LENKWINKELS EINES GABELSTAPLERS
SYSTÈME ET PROCÉDÉ DE DÉTERMINATION D'UN PREMIER ANGLE DE BRAQUAGE D'UN CHARIOT ÉLÉVATEUR À FOURCHE

(30) Priority: 08.12.2017 SE 1751511
(43) Date of publication of application: 12.06.2019
(73) Proprietor: Toyota Material Handling Manufacturing Sweden AB, 595 81 Mjölby (SE)
(72) Inventor: ARNSBY, Mattias, 583 32 Linköping (SE)
(74) Representative: Zacco Sweden AB

(56) References cited:
- US-A1- 2013 054 052
- US-B1- 6 445 984
- US-B2- 6 542 801

## Description

### TECHNICAL FIELD

The present disclosure relates to a system and a method for determining a first steering angle of a forklift truck. It further relates to a method and a system for improving safety when operating a forklift truck. The present disclosure even further relates to a forklift truck, to a computer program product and to a computer-readable medium.

### BACKGROUND ART

When operating a forklift truck it is important to know the steering angle of the truck. The steering angle can, for example, be used by safety systems of the truck to assure that no person and/or object is situated in the intended driving path of the truck. In this respect the steering angle is used for determining the intended driving path of the truck. For such safety systems it is therefore important that a determined steering angle of the truck is correct. A wrong steering angle might otherwise lead to a wrong intended driving path and thus to a wrong zone in front of the truck where the safety system looks for persons and/or objects.

In forklift trucks available on the market the steering angle is often determined by a dedicated steering angle sensor. A forklift truck comprising such steering system with a dedicated steering angle sensor is disclosed in the document US 6 542 801 B2.

### SUMMARY OF THE INVENTION

It is an objective of the present disclosure to present an alternative way of determining a steering angle of the forklift truck.

It is an objective of the present disclosure to present a way in which the proper functioning of a steering angle sensor can be assured, and/or in which at least a possible non-proper functioning of the steering angle sensor can be detected.

At least some of the objectives are achieved by a method for determining a first steering angle of a forklift truck. The method comprises the step of determining a first position and a first orientation of the truck. The method further comprises moving the truck. The method even further comprises determining a second position and a second orientation of the truck. The method yet even further comprises the step of determining a first steering angle of the truck based on the first position and orientation of the truck and based on the second position and orientation of the truck.

This provides the determining of a first steering angle without a dedicated steering angle sensor. Thus, a dedicated steering angle sensor might be dispensed with which might simplify design of the truck and save space and cost. Alternatively, an additional way of determining a first steering angle can be provided which might increase redundancy at the truck. This might, for example, lead to increased safety and/or increased operating functionality in case it is determined that the dedicated steering angle sensor is no longer working properly.

In one example of the method, the first position and/or the first orientation is determined via a navigation unit of the truck. This provides a specific way of implementation as a navigation unit is already present in several kinds of trucks. It might further allow the implementation of the method in existing trucks without the need of further equipment.

In one example of the method, the second position and/or the second orientation is determined via a navigation unit of the truck.

At least some of the objectives are also achieved by a method for improving safety when operating a forklift truck. The method comprises the step of determining a first steering angle according to a method of the present disclosure. The method further comprises the step of determining a second steering angle of the truck, wherein the determining of the second steering angle is not based on the first position and orientation of the truck and the second position and orientation of the truck. The method even further comprises determining whether the first and the second steering angle deviate more than a pre-determined threshold.

This provides a way of independently checking whether the two different methods for determining the first and the second steering angles provide similar results. Thus a proper functioning can be assured.

In one example, the method further comprises performing safety measures when it is determined that the first and second steering angles deviate more than a pre-determined threshold. This can prevent accidents and save costs related to such an accident.

At least some of the objectives are also achieved by a system for determining a first steering angle of a forklift truck. The system comprises means for determining a first position and a first orientation of the truck. The system further comprises means for moving the truck. The system even further comprises means for determining a second position and a second orientation of the truck. The system yet even further comprises means for determining a first steering angle of the truck based on the first position and orientation of the truck and based on the second position and orientation of the truck.

In one embodiment, the means for determining a first position and a first orientation of the truck comprise a navigation unit.

In one embodiment, the means for determining a second position and a second orientation of the truck comprise a navigation unit.

In one embodiment, the means for determining a first steering angle of the truck based on the first position and orientation of the truck and based on the second position and orientation of the truck comprise a at least one processor being arranged to determine the first steering angle.

At least some of the objectives are also achieved by a system for improving safety when operating a forklift truck. The system comprises a system for determining a first steering angle of a forklift truck according to the present disclosure. The system for improving safety further comprises means for determining a second steering angle of the truck, wherein the means are arranged to perform the determining of the second steering angle not based on the first position and orientation of the truck and not based on the second position and orientation of the truck. The system for improving safety even further comprises means for determining whether the first and the second steering angle deviate more than a pre-determined threshold.

In one embodiment, the means for determining a second steering angle of the truck comprise an orientation sensor for at least one turnable wheel of the forklift truck.

In one embodiment, the means for determining whether the first and the second steering angle deviate more than a pre-determined threshold comprise at least one processor.

In one embodiment the system for improving safety further comprises means for performing safety measures when it is determined that the first and second steering angles deviate more than a pre-determined threshold.

At least some of the objectives are also achieved by a forklift truck which comprises any of the systems according to the present disclosure.

In one embodiment, the forklift truck is an automatic truck.

At least some of the objectives are also achieved by a computer program product comprising instructions which, when the program is executed by a computer, cause the computer to carry out any of the methods according to the present disclosure.

At least some of the objectives are also achieved by a computer-readable medium comprising instructions which, when executed by a computer, cause the computer to carry out any of the methods according to the present disclosure.

The system, the forklift truck, the computer program product and the computer-readable medium have corresponding advantages as have been described in connection with the corresponding examples of the method according to this disclosure.

Further advantages of the present invention are described in the following detailed description and/or will arise to a person skilled in the art when performing the invention.

### BRIEF DESCRIPTION OF THE DRAWINGS

For a more detailed understanding of the present invention and its objects and advantages, reference is made to the following detailed description which should be read together with the accompanying drawings. Same reference numbers refer to same components in the different figures. In the following,
Fig. 1 shows, in a schematic way, a forklift truck according to one embodiment of the present disclosure;
Fig. 2 shows, in a schematic way, a system according to an embodiment of the present disclosure;
Fig. 3a-d show, in a schematic way, the possible orientation of wheels of an embodiment of a forklift truck;
Fig. 4a-b show, in a schematic way, flowcharts of examples of methods according to the present invention; and
Fig. 5a-b show examples of different travel paths for a forklift truck for moving from a first position to a second position.

### DETAILED DESCRIPTION

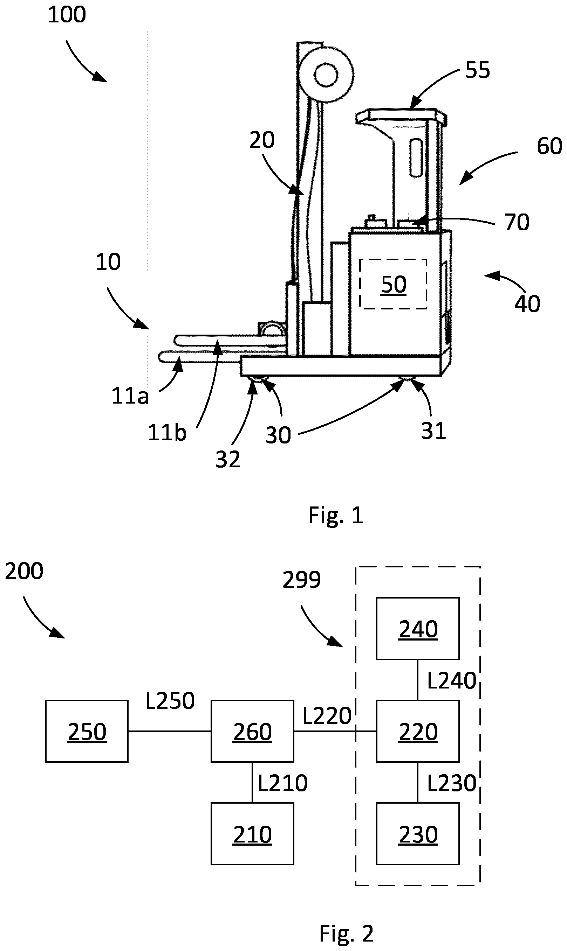

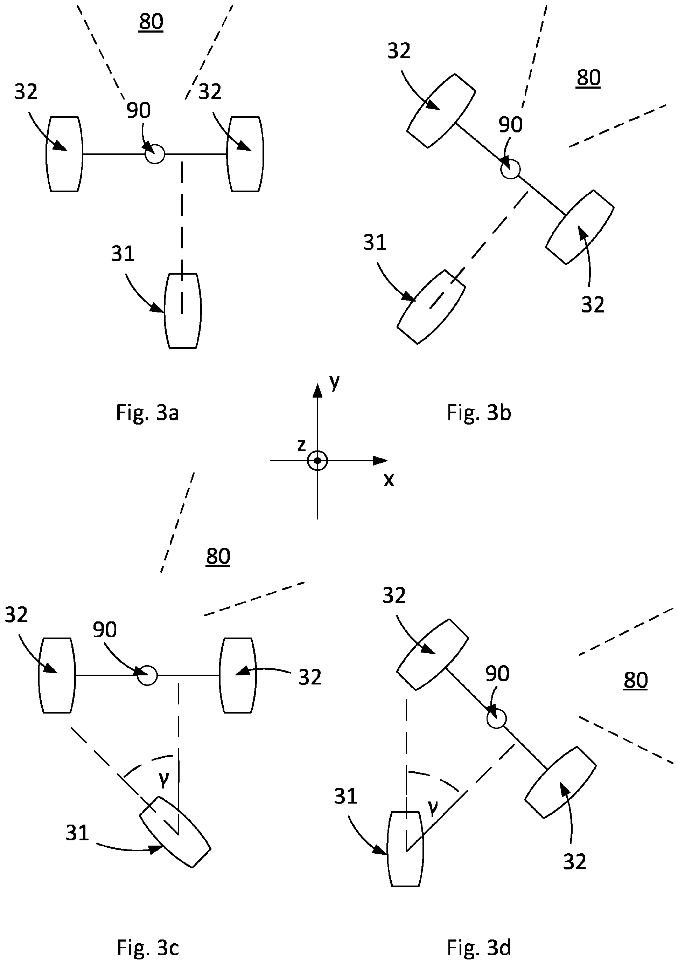

Fig. 1 shows, in a schematic way, a forklift truck 100 according to one embodiment of the present disclosure. The forklift truck comprises a load support member 10 which can comprise one or several forks 11a, b, ... Instead of, or additionally to forks 11a, b, ..., the forklift truck 100 can contain any other kind of load support member 10, like grabbing means or any other means for loading, grabbing, clamping and/or supporting goods. The forklift truck comprises a load support lifting element 20. The load support member 10 can be attached to the load support lifting element 20. The load support lifting element 20 can be arranged to lift the load support member 10. It should be understood that the disclosure is related also to a fork-lift truck that operates without a load support member, such as a in a towing operation in a warehouse. The forklift truck 100 comprises at least one ground engaging element 30, such as at least one wheel. The at least one ground engaging element 30 can comprise at least one steerable wheel 31. In one example, the at least one ground engaging element 30 comprises two, three, or four steerable wheels. Any other number of steerable wheels is possible as well. In one example, the at least one ground engaging element 30 comprises at least one non-steerable wheel 32. In one example, the at least one ground engaging element 30 comprises two, three, or four non-steerable wheels. Any other number of non-steerable wheels is possible as well. In that respect the expression steerable relates to the fact that the wheel can change its orientation when seen from above, i.e. in the z-direction in Fig. 1. This is further elaborated in relation to Fig. 3. Here, and in the whole application, the terms steerable and turnable are used interchangeably. No different meaning is intended.

The forklift truck 100 comprises a main truck body 40. The main truck body can comprise a driving unit 50 arranged to propel the truck. The main truck body 40 can comprise a system 299 for determining a first steering angle of the forklift truck 100. The system 299 will be described in more detail in relation to Fig. 2. However, it should be understood that parts of the system 299 or even the whole system 299 equally well can be arranged at other parts of the forklift truck 100.

The forklift truck 100 can comprise a truck roof 55. The truck 100 can comprise an operator space 60 where an operator can stand or sit during operation of the truck. The truck 100 can comprise an operator panel 70. Although the depicted example shows a truck which can be operated by an operator, the present disclosure works equally well with an automatic truck, i.e. a truck which does not require an operator at the truck when operating. Especially for automatic trucks the system and method of the present disclosure are useful as an alerted operator which can interact with the truck in case the truck behaves unexpectedly is no longer present. The forklift truck can also be of the type that comprises a tiller arm, such that the operator can walk with the truck, or stand on a platform and manoeuvre the truck with the tiller arm. In this case it is preferred that the main computer power of the truck, is situated in the handle of the tiller arm.

The forklift truck 100 can comprise support legs. The support legs comprises each at least one wheel. The support leg wheels should be positioned such that it is possible for the centre of gravity of a load carried by the load support member to be positioned between the support leg wheels and the main wheels of the forklift

The term "link" refers herein to a communication link which may be a physical connection such as an opto-electronic communication line, or a non-physical connection such as a wireless connection, e.g. a radio link or microwave link.

Fig. 2 shows, in a schematic way, a system 299 for determining a first steering angle of the forklift truck according to an embodiment of the present disclosure. Fig. 2 further shows, in a schematic way, a system 200 for improving safety when operating a forklift truck according to an embodiment of the present disclosure.

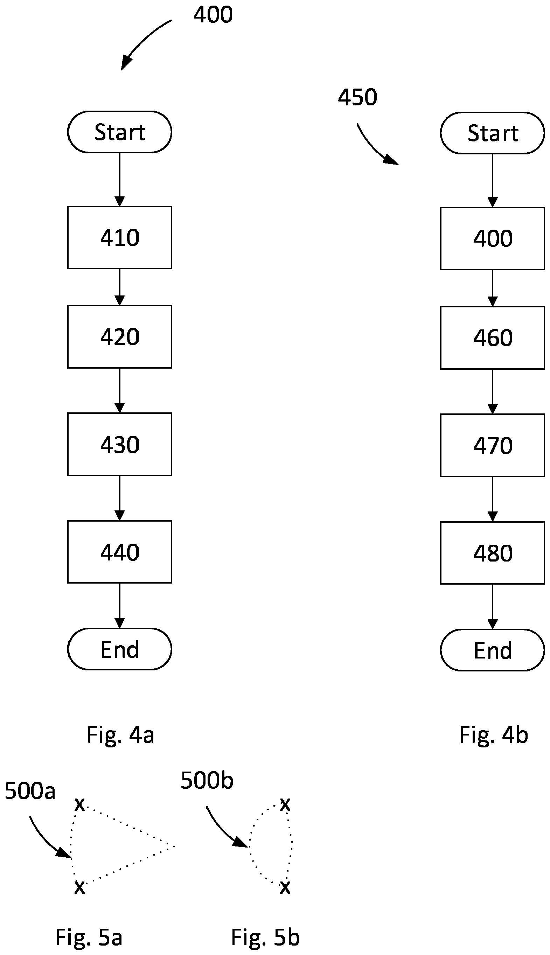

It should be understood that not all components in the depicted embodiments are necessary to perform the invention. Instead, the depicted embodiments explain the present disclosure so as to better describe one possible way of implementing the disclosure. The system 299 and/or the system 200 can be arranged to perform any of the actions described in relation to the methods of the present disclosure which are described in relation to Fig. 4.

In one example, the system 299 comprises means 240 for determining a first position and a first orientation of the truck. The means 240 can comprise a navigation unit of the truck. The navigation unit can be arranged to determine the first position and the first orientation of the truck. It is well known in the art how to determine a first position by a navigation unit. As an example, the navigation unit can be arranged to determine the first position via using a global navigation satellite system, GNSS, such as GPS or the like. The means 240 and/or the navigation unit can comprise a so-called laser guidance unit, LGU. The LGU can be arranged to determine the orientation of the truck. As an example, the LGU can be arranged to emit laser pulses from the truck. The LGU can further be arranged to detect the emitted laser pulses after they have been reflected by elements in the surrounding of the truck. As an example, a storage house in which the truck is operated can be equipped with reflective elements at the walls and/or storage elements, such as racks, in the storage house. The LGU can be arranged to determine the first orientation based on the reflected laser pulses. As an example, the LGU can be arranged to determine from which direction(s) laser pulses are reflected and/or how strong the laser pulses are reflected and/or how long time it takes until the reflected laser pulses are detected and/or whether and/or how the reflected laser pulses are modulated. The LGU can be arranged to determine the first orientation based on one, several, or all of these properties. The LGU can be arranged to determine the first position, for example based on one, several, or all of these properties. The LGU can be arranged on and/or at the roof 55 of the truck. The LGU can also be arranged as a group of LGU units that are situated in the lower part of the truck close to the surface on which the forklift is operating. The LGU can be arranged to compare one, several, or all of these properties to a stored map for determining the first position and/or orientation. The map can comprise information regarding locations and/or properties of the reflective elements. LGU and their working principles are known in the art. However, it should be understood that the first orientation of the truck is usually not sufficient to determine a steering angle of the truck. That is due to the fact that the steering angle of the truck can differ although the orientation might be the same. This can, for example, be seen when comparing Fig. 3a and Fig. 3c which will be described later.

Above, the means 240 have been mainly described in connection to a LGU. However, any other means for determining a first position and a first orientation of the truck can be used as well. As an example, the means 240 can comprise a camera unit which is arranged to determine position and/or orientation based on camera images. As an example, the camera unit can be arranged to determine contours of objects. The camera unit can be arranged to determine the first position and/or orientation based on the determined contours of objects. The camera unit can additionally and/or alternatively be arranged to detect barcodes in the surrounding of the truck, such as on the roof, at the wall, at the ground, and/or at objects in a storage house. The camera unit can be arranged to determine the first position and/or orientation based on the detected barcodes. In one example, the means 240 can comprise at least one magnetic detector. The at least one magnetic detector can be arranged to detect metal and/or magnetic signatures in the surrounding of the truck, such as in the ground close to the truck. The means 240 can be arranged to determine the first orientation and/or position based on the detected metal and/or magnetic signatures.

The system 299 comprises means for moving the truck (not shown in the figure). The means for moving the truck can comprise a motor, such as an electric motor, a combustion engine, or the like. The means for moving the truck can comprise the driving unit 50. The means for moving the truck are arranged to move the truck from a first position to a second position, wherein the second position is different from the first position. The means for moving the truck can, alone or in combination with other elements, also cause a change in orientation of the truck when moving from the first to the second position.

It is preferred that the truck uses an electric energy source on board if the motor is electric. The energy source is preferably a battery, preferably a lead, Li-Ion, Ni-MH or any other suitable rechargeable battery.

The system 299 further comprises means for determining a second position and a second orientation of the truck. These means can be the same as the means 240 for determining the first position and the first orientation of the truck. They can be arranged to operate in the same way as described earlier in relation to the means 240.

The system 299 can comprise at least one sensor 230 at a wheel of the truck, such as at the driving wheel. The sensor 230 can be arranged to determine the revolutions of the wheel. The sensor 230 can be arranged to determine the distance which the wheel is travelling. The sensor 230 is preferably a rotary encoder, but other means for measuring is of course possible such as by optic measurement to the surface on which the truck is operating or an accelerometer etc.

The system 299 comprises means for determining a first steering angle of the truck based on the first position and orientation of the truck and based on the second position and orientation of the truck. These means can comprise a first control unit 220. In one example, the first control unit 220 is a unit for automation control. The first control unit 220 can comprise one or more processors.

The first control unit 220 can be arranged to control operation of the at least one sensor 230. The first control unit 220 is arranged for communication with the at least one sensor 230 via a link L230. The first control unit 220 is arranged to receive information from the at least one sensor 230. The first control unit 220 can be arranged to determine the travelling distance of the truck based on the signals received from the at least one sensor 230.

The first control unit 220 can be arranged to control operation of the means 240. The first control unit 220 is arranged for communication the means 240 via a link L240. The first control unit 220 is arranged to receive information from the means 240. What has been said regarding the first control unit 220 and the means 240 applies as well to the first control unit 220 in relation to the means for determining a second position and a second orientation of the truck. The first control unit 220 can be arranged to receive the first position and/or orientation of the truck. The first control unit 220 can be arranged to receive the second position and/or orientation of the truck.

Although the above has been described as several units, it is also possible to combine the means for determining a first steering angle of the truck based on the first position and orientation of the truck and based on the second position and orientation of the truck and the means for determining the first and/or second position and/or orientation in a single unit.

The system 200 comprises the system 299.

In one example, the system 200 comprises means 210 for determining a second steering angle of the truck. The means 210 are arranged for determining the second steering angle of the truck. In one example, the means 210 comprise at least one sensor, such as an orientation sensor for at least one turnable wheel of the forklift truck. In one example, the at least one turnable wheel is what is commonly known as a steering wheel of the truck. It is known in the art how to determine steering angles of trucks via orientation sensors at wheels. The means 210 are arranged to determine the second steering angle not based on the first position and the first orientation of the truck. The means 210 are arranged to determine the second steering angle not based on the second position and the second orientation of the truck.

In one example, the system 200 comprises a second control unit 260. The second control unit 260 can comprise at least one processor. The second control unit 260 can comprise a programmable logic controller, PLC. The second control unit 260 can be arranged to control safety measures of the truck.

The second control unit 260 can be arranged to control operation of the means 210. The second control unit 260 can be arranged for communication with the means 210 via a link L210. The second control unit 260 can be arranged to receive information from the means 210. The second control unit 260 can be arranged to receive the second steering angle of the truck from the means 210.

The second control unit 260 can be arranged for communication with the first control unit 220 via a link L220. The second control unit 260 can be arranged to receive information from the second control unit 220. The second control unit 260 can be arranged to receive the first steering angle of the truck from the first control unit 220.

The system 200 is described in relation with a first and a second control unit 220, 260. However, in one example the functioning of the first and the second control unit 220, 260 is combined in a single control unit.

The system 200 can comprise a personal protection system 250, PPS. The PPS 250 can be arranged to assure that the truck is operated in a safe manner for persons in the surrounding of the truck. The PPS 250 can comprise a laser scanner unit, LSU (not shown). The LSU can be arranged to scan the surrounding of the truck for any potential objects and/or persons which are in the way for the truck and/or potentially can be in the way of the truck. The LSU can comprise at least one laser which is arranged to perform the scanning. The LSU can be arranged to perform the scanning in a pre-determined scanning area around the truck, wherein the scanning area can have a pre-determined opening angle. Preferable, in case the truck is moving forward, the LSU is arranged to orient the scanning area substantially forward. Such a situation is depicted in Fig. 3a. In one example, the LSU is arranged to shift the orientation of the scanning areas, for example in pre-determined steps. As an example, the LSU can be arranged to shift the orientation of the scanning area in steps of 5, 10, or 15 degrees. Preferably, the LSU is arranged to shift the orientation of the scanning area based on the determined steering angle of the truck. This shifting is preferably performed in such a way that the scanning area covers the intended driving path of the truck. It is, however, not necessary that the shifting of the orientation of the scanning area and the determined steering angle of the truck are exactly the same. As an example, if it is determined that the steering angle is 13 degrees and the orientation of the scanning area only can shift in steps of 5 degrees, the shifting of the orientation area might be 15 degrees in this case. Preferably, the opening angle is chosen large enough to detect objects and/or persons outside the potential driving path which might be on the way to move into the potential driving path. The PPS 250 can be arranged to perform measures when it is detected that a person and/or object is in the potential driving path of the truck and/or in the scanning area, and/or parts of the scanning area. The measures can depend on the position in the scanning area and/or the distance of the scanned persons and/or objects. Examples of measures are causing warning signals, changing of the driving direction of the truck and/or changing of the speed of the truck, potentially to a stop of the truck.

Above, the PPS 250 has been described in relation to a LSU. However, the PPS can comprise any other means for assuring the safety. These other means can have similar or even the same functioning as the LSU described above, for example regarding opening angles, scanning areas, and shifting of the orientation of the scanning area.

The PPS 250 and in particular the LSU can also be used for navigation purposes in some applications in the same way as described above in relation to the LGU.

The first and/or second control unit 220, 260 can be arranged for communication with the PPS 250 via a link L250. The PPS 250 can be arranged to receive information from the first and/or second control unit 220, 260. The PPS 250 can be arranged to receive the first and/or second steering angle of the truck.

The system 200 comprises means for determining whether the first and the second steering angle deviates more than a pre-determined threshold. In one example, the means comprise the PPS 250. In one example, the means comprise the first and/or second control unit 220, 260.

In one example, the pre-determined threshold is a few degrees. It is generally not necessary to have a very low threshold of, for example, 1 degree or less since such deviation naturally may occur due to measurement uncertainties or the like. Further the opening angle of the scanning area and/or the steps in which the orientation of the scanning area can be shifted does usually not necessitate to know the steering angle very exactly since the opening angle has same safety margins and since the shifting of the orientation might not be possible at steps of only one degree, or the like.

The system 200 can comprise means for performing safety measures when it is determined that the first and second steering angles deviate more than a pre-determined threshold. The means can comprise the PPS 250. The means can comprise the first and/or second control unit 220, 260. The safety measures can be the same safety measures as described above.

Fig. 3a-d show, in a schematic way, the possible orientation of wheels of an embodiment of a forklift truck. Fig. 3a-d are views directly from the top. It should be emphasised that the figures are only schematic for illustrating the working principle of the present disclosure. Thus, as an example, the size of different elements and the distance between elements might not be at the same scale. The depicted forklift truck has three wheels. The depicted forklift truck comprises one steerable wheel 31 and two non-steerable wheels 32. However, this is only an example and the present disclosure is applicable to trucks with any numbers of non-steerable and steerable wheels. A scanning area 80 (partly delimited by the two dashed lines in each of the figures) with an opening angle (defined by the two dashed lines in each of the figures) is depicted as well. This scanning area 80 and the opening angle have been described in more detail in relation to Fig. 2. They are only depicted in a schematic way and may differ in a specific implementation, for example by size, position, and/or opening angle.

A steering angle γ determines in which direction the truck is moving. A centre of rotation 90 determines around which point the truck is rotating. The figures 3a-d have a common coordinate system. In Fig. 3a the steering angle γ is zero and the truck is moving solely in the y-direction. The scanning area is oriented in the driving direction. Fig. 3b depicts the same situation as in Fig. 3a, except that the truck is now oriented in a different direction. Fig. 3c depicts the truck oriented as in Fig. 3a. However, now the steering angle γ is not zero. As a consequence, the truck will not move solely in the y-direction but will instead move in a curve away from the y-direction. As a consequence, the scanning area has been shifted in its orientation compared to Fig. 3a. The scanning area has not to be shifted exactly by the same angle γ as the steering angle. This has been described above in relation to Fig. 2. Fig. 3d depicts the same situation as in Fig. 3c, except that the truck is oriented differently in the coordinate system. As an example, in case the truck is starting with orientation as in Fig. 3c, the truck will eventually arrive at the orientation depicted in Fig. 3d in case the steering angle is kept constant.

In the depicted figures, the steerable wheel 31 is side-shifted in relation to the central point of a line connecting the non-steerable wheels. The present disclosure can equally well be applied at a truck where the steerable wheel 31 is not side-shifted in relation to the central point.

Fig. 4a-b show, in a schematic way, flowcharts of examples of methods according to the present invention. The methods can be applied to any kind of forklift trucks, especially those described in connection to Fig. 1-3. The methods are especially suitable for automatic trucks. The described methods can comprise any of the actions which the elements described in relation to Fig. 1-3 are arranged or configured to. Conversely, the elements described in relation to Fig. 1-3 can be arranged or configured to perform the method steps described in relation to Fig. 4a-b.

Fig. 4a depicts a flowchart of a method 400 for determining a first steering angle of a forklift truck. The method starts with step 410.

In step 410 a first position and a first orientation of the truck is determined. This can be performed by a navigation unit. Step 410 can comprise emitting laser pulses. Step 410 can comprise detecting reflected laser pulses. Step 410 can comprise analysing detected laser pulses, for example regarding time of flight, modulation, or the like. The determining of a first position and/or a first orientation can comprise using an inertial measurement unit, IMU, using a global navigation satellite system, GNSS, and/or using a camera system to analyse the surrounding of the truck. Step 410 can comprise comparing information regarding the detected laser pulses and/or regarding images of the camera system with pre-stored information regarding the surrounding of the truck. This pre-stored information can, for example, comprise position, orientation, reflection properties, or the like, of objects in the surrounding of the truck. Examples of such objects are reflective elements, barcodes, placement of storing arrangements, or the like. For comparing, step 410 can comprise sending and/or receiving information to a system comprising the pre-stored information. The system comprising the pre-stored information can be aboard the truck, outside the truck, or partly aboard and partly outside the truck. The method continues with step 420.

In step 420 the truck is moved. This can be achieved by any means to move the truck, such as a combustion engine, an electric motor, or the like. This step is performed to assure that not both the second orientation and the second position, which will be described soon, do coincide with the first orientation and the first position. The method 400 can comprise the step of waiting a first pre-determined time period between step 410 and step 430. That first pre-determined time period can, for example, be 1, 2, 3, 4, or 5 seconds. In one example, it is determined whether the truck has been moved during that first pre-determined time period. The method 400 is in one example aborted and/or restarted in case the truck is not moved during the first pre-determined time period. In one example, the waiting time period is prolonged in case the first pre-determined time period has been passed without moving the truck. The prolongation of time period can equal the first pre-determined time period or be any other suitable time period. It can then be determined whether the truck has moved during the prolonged time period. If the truck has been moved, the method can continue with step 430, otherwise the method can be prolonged repeatedly until a movement is detected.

In one example, step 420 comprises determining the distance which the truck moves. It should be emphasised that the distance which the truck moves is not necessarily the mere distance between the first and the second position. These two distances usually only coincide in case the truck moves in a straight line from the first to the second position. However, in case the truck moves on a curved line, the two distances usually do not coincide. After step 420, the method continues with step 430.

Step 430 comprises determining a second position and a second orientation of the truck. This can be performed in the same manner as described in relation to step 410. Due to the movement of the truck, at least one of the second position and the second orientation will deviate from the first position and the first orientation of the truck. In a preferred example, the second position and the second orientation of the truck are determined in the same way as the first position and the first orientation. This has the advantage that resources are reused and might thus, for example, lower cost and/or weight of the truck. However, this is not a requirement. In principle, the second position and the second orientation can be determined differently than the first position and orientation. After step 430 the method continues with step 440.

In step 440 a first steering angle of the truck is determined based on the first position and orientation of the truck and based on the second position and orientation of the truck. This can be exemplified with the help of Fig. 3a-d. In one example, the truck is oriented as in Fig. 3a both at the first and at the second position, wherein the first and the second position are not the same. It can then be concluded that the steering angle γ is zero since the orientation has not changed between the different orientations. In another example, the truck is oriented as in Fig. 3c at the first position and as in Fig. 3d at the second position. It should be emphasised that the term orientation of the truck relates not to the orientation of the turnable wheel but instead of the orientation of the truck body or the like. In relation to Fig. 1 and 3a-d the orientation of the truck coincides with the orientation of the non-steerable wheels. Turning back to the example of Fig. 3 c and d regarding first and second orientation, it can be concluded that the steering angle γ is not zero since the orientation has changed between the first and the second position. For determining the steering angle it is, however, not enough to only look at the difference in the orientation. As an example, the first and the second orientation might differ by β=20 degrees. This does by no means mean that the steering angle is 20 degrees as well. Assuming that the first and the second position differ by 1 metre and the first and the second orientation differ by β, means that the steering angle γ is larger as if the first and the second position would differ by 2 metres and the first and the second orientation differ by the same amount β.

Other examples are given in relation to Fig. 5a-b. Therein, the first and the second position, each marked by the letter "x" differ by the same amount in each of the figures. The first position is assumed to be the lower "x" and the second position is assumed to be the upper "x". The driving path is denoted by 500a, b, respectively and is in this example assumed to be comprised of circular arc(s). In Fig. 5a and b the driving path 500a, b, respectively, consist of one circular arc. For emphasising the differences, not only the circular arcs but also the slices defined by the circular arcs are depicted in the figures. As can be seen, the driving path differs substantially between the two figures although the first and the second positions are identical. The driving path 500b in Fig. 5b is longer than the driving path 500a in Fig. 5a. Since the driving paths in these figures consist of circular arcs, the steering angle γ is larger in Fig. 5b compared to Fig. 5a. The circular arc, and thus the steering angle, can in these cases thus only be determined by using the orientations in addition to the positions. The first and the second orientation of the truck will differ between Fig. 5a and 5b. The truck is oriented basically upwards in the first and second orientation in Fig. 5a, whereas the truck is oriented basically to the left and to the right, respectively, in the first and second orientation in Fig. 5b.

After step 440 the method ends. The method 400 can be performed repeatedly, for example after a pre-determined time-schema. In one example, the method 400 is repeated around every 1, 2, 3, 4, or 5 seconds.

Above, it has been described that the method can be repeated after a pre-determined time period or that the waiting step can be during a pre-determined time period. Alternatively, or additionally, the waiting can be performed for a pre-determined length of the travel path of the truck, and/or the method can be repeated after a pre-determined length of the travel path of the truck. The length is preferably chosen in such a way that the steering angle does not alter substantially during the travel path. In one example, the length is around 0.3 metre. The length of the travel path can be determined via a sensor counting the revolutions of a wheel of the truck, such as sensor 230 described in relation to Fig. 2. In one example the length of the travel path is determined by a navigation system.

Fig. 4b describes a method 450 for improving safety when operating a forklift truck. The method starts with step 400 of determining a first steering angle which has been described in relation to Fig. 4a. The method continues with step 460.

In step 460 a second steering angle of the truck is determined. The determining of the second steering angle is not based on the first position and orientation of the truck. The determining of the second steering angle is not based on the second position and orientation of the truck. In one example, step 460 comprises determining the orientation of a turnable wheel of the truck. The orientation of the turnable wheel can directly correspond to the steering angle, as depicted in Fig. 3a-d. The second steering angle of the truck can be determined by an orientation sensor for at least one turnable wheel of the forklift truck. After step 460 the method continues with step 470.

In step 470 it is determined whether the first and the second steering angle deviate more than a pre-determined threshold. The pre-determined threshold can, for example, be one or a few degrees. This has been described in more details in relation to Fig. 2. The method continues with step 480.

In step 480 safety measures are performed when it is determined that the first and second steering angles deviate more than a pre-determined threshold. Examples of safety measures are lowering the speed of the truck, stopping a movement of the truck, emitting a warning signal, or the like. After step 480 the method 450 ends.

The method 450 can especially be used to assure the correct functioning of an ordinary sensor for determining the steering angle of a truck. This is assured by providing an independent different way of determining the steering angle, namely preferably via method 400. Trucks are usually already equipped with a navigation unit, or any other of the means 240 described in relation to Fig. 2. By reusing these means for a different purpose than their main intention, namely by reusing them for determining a first steering angle, a functioning control of a sensor for an steering angle can be provided without additional equipment, especially without the need of a second sensor for a steering angle.

The assuring of the proper functioning is especially useful for autonomous trucks as they do not have a human driver which can directly interact in case the truck behaves unexpected.

The methods 400 and 450 have been described in a specific order. However, as long as one step does not necessarily require the input of another step, the steps can be performed in any other order as well. The steps can also be performed in parallel.

Any of the methods 400 and 450 can be part of a computer program product comprising instructions which, when the program is executed by a computer, cause the computer to carry out the corresponding method. Herein, the term computer can relate to a dedicated computer and/or to one or more control units of the truck, such as the first and/or second control unit described in relation to Fig. 2.

Different examples and embodiments of the present disclosure can be combined to arrive at further examples and embodiments within the limitations of the claims.

## Claims

1. A method (400) for determining a first steering angle of a forklift truck, the method comprising the steps of:
- determining (410) a first position and a first orientation of the truck;
- moving (420) the truck;
- determining (430) a second position and a second orientation of the truck; and
- determining (440) a first steering angle of the truck based on the first position and orientation of the truck and based on the second position and orientation of the truck.

2. The method according to the previous claim, wherein the first position and/or the first orientation is determined via a navigation unit of the truck, preferably the second position and/or the second orientation is determined via a navigation unit of the truck.

3. A method (450) for improving safety when operating a forklift truck, the method comprising the steps of:
- determining (400) a first steering angle according to any of the previous claims;
- determining (460) a second steering angle of the truck, wherein the determining of the second steering angle is not based on the first position and orientation of the truck and the second position and orientation of the truck;
- determining (470) whether the first and the second steering angle deviate more than a pre-determined threshold.

4. The method according to claim 3, further comprising the steps of:
- performing (480) safety measures when it is determined that the first and second steering angles deviate more than a pre-determined threshold.

5. A system (299) for determining a first steering angle of a forklift truck, the system comprising:
- means (240) for determining a first position and a first orientation of the truck;
- means for moving the truck;
- means (240) for determining a second position and a second orientation of the truck; and
- means (220) for determining a first steering angle of the truck based on the first position and orientation of the truck and based on the second position and orientation of the truck.

6. The system according to claim 5, wherein said means (220) for determining a first position and a first orientation of the truck comprise a navigation unit, preferably said means (220) for determining a second position and a second orientation of the truck comprise a navigation unit.

7. The system according to any of the claims 5-6, wherein said means (240) for determining a first steering angle of the truck based on the first position and orientation of the truck and based on the second position and orientation of the truck comprise a at least one processor being arranged to determine said first steering angle.

8. A system (200) for improving safety when operating a forklift truck, the system comprising:
- a system (299) for determining a first steering angle of a forklift truck according to any of the claims 5-7;
- means (210) for determining a second steering angle of the truck, wherein the determining of the second steering angle is not based on the first position and orientation of the truck and the second position and orientation of the truck;
- means (260) for determining whether the first and the second steering angle deviate more than a pre-determined threshold.

9. The system according to claim 8, wherein said means (210) for determining a second steering angle of the truck comprise an orientation sensor for at least one turnable wheel of the forklift truck.

10. The system according to anyone of claims 8-9, wherein said means (260) for determining whether the first and the second steering angle deviate more than a pre-determined threshold comprise at least one processor.

11. The system according to anyone of the claims 8-10, further comprising means (250) for performing safety measures when it is determined that the first and second steering angles deviate more than a pre-determined threshold.

12. A forklift truck (100), comprising the system according to anyone of claims 5-11.

13. The forklift truck according to claim 12, wherein the forklift truck is an automatic truck.

14. A computer program product comprising instructions to cause the system according to anyone of claims 5-7 to carry out the method according to anyone of claims 1 and 2 or a computer program product comprising instructions to cause the system according to anyone of claims 8-11 to carry out the method according to anyone of claims 3 and 4.

15. A computer-readable medium having stored thereon the computer program product of claim 14.

## Patentansprüche

1. Verfahren (400) zum Bestimmen eines ersten Lenkwinkels eines Gabelstaplers, wobei das Verfahren die folgenden Schritte umfasst:
- Bestimmen (410) einer ersten Position und einer ersten Ausrichtung des Staplers;
- Bewegen (420) des Staplers;
- Bestimmen (430) einer zweiten Position und einer zweiten Ausrichtung des Staplers; und
- Bestimmen (440) eines ersten Lenkwinkels des Staplers basierend auf der ersten Position und Ausrichtung des Staplers und basierend auf der zweiten Position und Ausrichtung des Staplers.

2. Verfahren nach dem vorhergehenden Anspruch, wobei die erste Position und/oder die erste Ausrichtung über eine Navigationseinheit des Staplers bestimmt wird, vorzugsweise die zweite Position und/oder die zweite Ausrichtung über eine Navigationseinheit des Staplers bestimmt wird.

3. Verfahren (450) zur Verbesserung der Sicherheit beim Betrieb eines Gabelstaplers, wobei das Verfahren die folgenden Schritte umfasst:
- Bestimmen (400) eines ersten Lenkwinkels nach einem der vorhergehenden Ansprüche;
- Bestimmen (460) eines zweiten Lenkwinkels des Staplers, wobei das Bestimmen des zweiten Lenkwinkels nicht auf der ersten Position und Ausrichtung des Staplers und der zweiten Position und Ausrichtung des Staplers basiert;
- Bestimmen (470), ob der erste und der zweite Lenkwinkel um mehr als einen vorbestimmten Schwellenwert abweichen.

4. Verfahren nach Anspruch 3, ferner umfassend die folgenden Schritte:
- Durchführen (480) von Sicherheitsmaßnahmen, wenn bestimmt wird, dass der erste und der zweite Lenkwinkel um mehr als einen vorbestimmten Schwellenwert abweichen.

5. System (299) zum Bestimmen eines ersten Lenkwinkels eines Gabelstaplers, wobei das System Folgendes umfasst:
- Mittel (240) zum Bestimmen einer ersten Position und einer ersten Ausrichtung des Staplers;
- Mittel zum Bewegen des Staplers;
- Mittel (240) zum Bestimmen einer zweiten Position und einer zweiten Ausrichtung des Staplers; und
- Mittel (220) zum Bestimmen eines ersten Lenkwinkels des Staplers basierend auf der ersten Position und Ausrichtung des Staplers und basierend auf der zweiten Position und Ausrichtung des Staplers.

6. System nach Anspruch 5, wobei die Mittel (220) zum Bestimmen einer ersten Position und einer ersten Ausrichtung des Staplers eine Navigationseinheit umfassen, vorzugsweise die Mittel (220) zum Bestimmen einer zweiten Position und einer zweiten Ausrichtung des Staplers eine Navigationseinheit umfassen.

7. System nach einem der Ansprüche 5 bis 6, wobei die Mittel (240) zum Bestimmen eines ersten Lenkwinkels des Staplers basierend auf der ersten Position und Ausrichtung des Staplers und basierend auf der zweiten Position und Ausrichtung des Staplers mindestens einen Prozessor umfassen, der angeordnet ist, um den ersten Lenkwinkel zu bestimmen.

8. System (200) zur Verbesserung der Sicherheit beim Betrieb eines Gabelstaplers, wobei das System Folgendes umfasst:
- ein System (299) zum Bestimmen eines ersten Lenkwinkels eines Gabelstaplers nach einem der Ansprüche 5 bis 7;
- Mittel (210) zum Bestimmen eines zweiten Lenkwinkels des Staplers, wobei das Bestimmen des zweiten Lenkwinkels nicht auf der ersten Position und Ausrichtung des Staplers und der zweiten Position und Ausrichtung des Staplers basiert;
- Mittel (260) zum Bestimmen, ob der erste und der zweite Lenkwinkel um mehr als einen vorbestimmten Schwellenwert abweichen.

9. System nach Anspruch 8, wobei die Mittel (210) zum Bestimmen eines zweiten Lenkwinkels des Staplers einen Ausrichtungssensor für mindestens ein drehbares Rad des Gabelstaplers umfassen.

10. System nach einem der Ansprüche 8 bis 9, wobei die Mittel (260) zum Bestimmen, ob der erste und der zweite Lenkwinkel um mehr als einen vorbestimmten Schwellenwert abweichen, mindestens einen Prozessor umfassen.

11. System nach einem der Ansprüche 8 bis 10, ferner umfassend Mittel (250) zum Durchführen von Sicherheitsmaßnahmen, wenn bestimmt wird, dass der erste und der zweite Lenkwinkel um mehr als einen vorbestimmten Schwellenwert abweichen.

12. Gabelstapler (100), der das System nach einem der Ansprüche 5 bis 11 umfasst.

13. Gabelstapler nach Anspruch 12, wobei der Gabelstapler ein Automatikstapler ist.

14. Computerprogrammprodukt, das Anweisungen umfasst, um das System gemäß einem der Ansprüche 5 bis 7 zu veranlassen, das Verfahren gemäß einem der Ansprüche 1 und 2 auszuführen, oder Computerprogrammprodukt, das Anweisungen umfasst, um das System gemäß einem der Ansprüche 8 bis 11 zu veranlassen, das Verfahren gemäß einem der Ansprüche 3 und 4 auszuführen.

15. Computerlesbares Medium, auf dem das Computerprogrammprodukt nach Anspruch 14 gespeichert ist.

## Revendications

1. Procédé (400) pour déterminer un premier angle de braquage d'un chariot élévateur à fourche, comprenant les étapes consistant à :
- déterminer (410) une première position et une première orientation du chariot ;
- déplacer (420) le chariot ;
- déterminer (430) une deuxième position et une deuxième orientation du chariot ; et
- déterminer (440) un premier angle de braquage du chariot sur la base de la première position et de la première orientation du chariot et sur la base de la deuxième position et de la deuxième orientation du chariot.

2. Procédé selon la revendication précédente, dans lequel la première position et / ou la première orientation est déterminée via une unité de navigation du chariot, de préférence la deuxième position et / ou la deuxième orientation est déterminée via une unité de navigation du chariot.

3. Procédé (450) pour améliorer la sécurité lors de l'utilisation d'un chariot élévateur à fourche, le procédé comprenant les étapes consistant à :
- déterminer (400) un premier angle de braquage selon l'une quelconque des revendications précédentes ;
- déterminer (460) un deuxième angle de braquage du chariot, la détermination du deuxième angle de braquage n'étant pas basée sur la première position et la première orientation du chariot et la deuxième position et la deuxième orientation du chariot ;
- déterminer (470) si le premier et le deuxième angle de braquage s'écartent de plus qu'un seuil prédéterminé.

4. Procédé selon la revendication 3, comprenant en outre l'étape consistant à :
- exécuter (480) des mesures de sécurité lorsqu'il est déterminé que les premier et deuxième angles de braquage s'écartent de plus qu'un seuil prédéterminé.

5. Système (299) pour déterminer un premier angle de braquage d'un chariot élévateur à fourche, le système comprenant :
- des moyens (240) pour déterminer une première position et une première orientation du chariot ;
- des moyens pour déplacer le chariot ;
- des moyens (240) pour déterminer une deuxième position et une deuxième orientation du chariot ; et
- des moyens (220) pour déterminer un premier angle de braquage du chariot sur la base de la première position et de la première orientation du chariot et sur la base de la deuxième position et de la deuxième orientation du chariot.

6. Système selon la revendication 5, dans lequel lesdits moyens (220) pour déterminer une première position et une première orientation du chariot comprennent une unité de navigation, de préférence lesdits moyens (220) pour déterminer une deuxième position et une deuxième orientation du chariot comprennent une unité de navigation.

7. Système selon l'une quelconque des revendications 5 à 6, dans lequel lesdits moyens (240) pour déterminer un premier angle de braquage du chariot sur la base de la première position et de la première orientation du chariot et sur la base de la deuxième position et de la deuxième orientation du chariot comprennent au moins un processeur étant agencé pour déterminer ledit premier angle de braquage.

8. Système (200) pour améliorer la sécurité lors de l'utilisation d'un chariot élévateur à fourche, le système comprenant :
- un système (299) pour déterminer un premier angle de braquage d'un chariot élévateur à fourche selon l'une quelconque des revendications 5 à 7;
- des moyens (210) pour déterminer un deuxième angle de braquage du chariot, la détermination du deuxième angle de braquage n'étant pas basée sur la première position et la première orientation du chariot et la deuxième position et la deuxième orientation du chariot ;
- des moyens (260) pour déterminer si le premier et le deuxième angle de braquage s'écartent de plus qu'un seuil prédéterminé.

9. Système selon la revendication 8, dans lequel lesdits moyens (210) pour déterminer un deuxième angle de braquage du chariot comprennent un capteur d'orientation pour au moins une roue pivotante du chariot élévateur à fourche.

10. Système selon l'une quelconque des revendications 8 à 9, dans lequel lesdits moyens (260) pour déterminer si le premier et le deuxième angle de braquage s'écartent de plus qu'un seuil prédéterminé comprennent au moins un processeur.

11. Système selon l'une quelconque des revendications 8 à 10, comprenant en outre des moyens (250) pour exécuter des mesures de sécurité lorsqu'il est déterminé que les premier et deuxième angles de braquage s'écartent de plus qu'un seuil prédéterminé.

12. Chariot élévateur à fourche (100), comprenant le système selon l'une quelconque des revendications 5 à 11.

13. Chariot élévateur à fourche selon la revendication 12, dans lequel le chariot élévateur à fourche est un chariot automatique.

14. Produit de programme informatique comprenant des instructions pour amener le système selon l'une quelconque des revendications 5 à 7 à exécuter le procédé selon l'une quelconque des revendications 1 et 2, ou un produit de programme informatique comprenant des instructions pour amener le système selon l'une quelconque des revendications 8 à 11 à exécuter le procédé selon l'une quelconque des revendications 3 et 4.

15. Support lisible par ordinateur ayant stocké en son sein le programme informatique selon la revendication 14.
